Europäisches Patentamt

**European Patent Office**

**Office européen des brevets**

(11) Numéro de publication: **0 207 854 B1**

## (12) FASCICULE DE BREVET EUROPEEN

(45) Date de publication de fascicule du brevet:
**29.01.92**

(21) Numéro de dépôt: **86401407.1**

(22) Date de dépôt: **26.06.86**

(51) Int. Cl.⁵: **C09D 5/02**, C08L 51/00

---

### (54) Composition de revêtement stable au stockage.

---

(30) Priorité: **28.06.85 FR 8509875**

(43) Date de publication de la demande:
**07.01.87 Bulletin 87/02**

(45) Mention de la délivrance du brevet:
**29.01.92 Bulletin 92/05**

(84) Etats contractants désignés:
**AT BE CH DE FR GB IT LI LU NL SE**

(56) Documents cités:
**EP-A- 0 151 360**
**US-A- 3 454 516**
**US-A- 3 457 209**
**US-A- 3 729 439**
**US-A- 4 351 875**

(73) Titulaire: **CRAY VALLEY SA**
**Tour Total, 24 cours Michelet**
**F-92800 Puteaux(FR)**

(72) Inventeur: **Tripette, Claude**
**Résidence du Roussay Rue Debussy**
**F-91580 Etréchy(FR)**

(74) Mandataire: **Dubost, Thierry et al**
**CRAY VALLEY Service Propriété Industrielle**
**Parc Technologique ALATA BP 22**
**F-60550 Verneuil-en-Halatte(FR)**

## Description

Le document US-A-3,457,209 décrit un latex comprenant un copolymère de 50 à 95 % en poids d'un (méth)acrylate d'alkyle, 0,5 à 15 % en poids de N-méthylol(méth)acrylamide et jusqu'au 49 % en poids d'autres comonomères vinylidéniques (tels que diènes conjugués, oléfines, esters vinyliques, styrène, (méth)acrylamide, acide (méth)-acrylique), ledit copolymère étant surpolymérisé (greffé) par 0,1 à 10 % en poids d'acide (méth)-acrylique ou itaconique, le cas échéant en présence d'un monomère vinylidénique. En ajustant le pH de ce latex par addition d'alcali, on obtient un système de très haute viscosité (par exemple 750 à 15 000 poises pour un latex contenant environ 50 % de matières solides à pH 9-9,5) sans avoir besoin d'ajouter un agent épaississant.

La composition de revêtement selon l'invention comprend au moins un dispersant, au moins un mouillant, au moins un modificateur de rhéologie, au moins un coalescent, au moins une base minérale, au moins un retardateur de coalescence et au moins un liant constitué d'une dispersion aqueuse de particules de polymère, et elle est caractérisée en ce que ladite dispersion comprend au moins un interpolymère de (A) 95 à 99 % en poids d'au moins un monomère choisi parmi les acrylates et méthacrylates d'alkyle dont le groupe alkyle a de 1 à 8 atomes de carbone et (B) de 1 à 5 % en poids d'au moins un monomère hydrosoluble copolymérisable avec le(s) monomère(s)(A), lesdites particules ayant une structure composite comprenant un noyau et une enveloppe, et ladite enveloppe contenant de 50 à 90 % en moles du(des) monomère(s) hydrosoluble(s) de la dispersion.

Une dispersion aqueuse de particules de polymère comme celle utilisée dans la composition de revêtement selon l'invention peut être fabriquée par un procédé spécifique comprenant une première étape de polymérisation en émulsion dans l'eau du(des) monomère(s)(A) puis une seconde étape consistant à introduire dans le réacteur, lorsque le taux d'avancement de la réaction de polymérisation a atteint une valeur au moins égale à 82 %, un mélange comprenant de 12 à 45 % en poids d'au moins un monomère hydrosoluble (B) et de 55 à 88 % en poids de monomères (A). L'étape de polymérisation est généralement effectuée à une température comprise entre 45°C et 75°C en présence d'au moins un initiateur du type générateur de radicaux libres. L'initiateur de polymérisation peut être notamment choisi parmi les persulfates, les peroxydes, les hydroperoxydes et les composés diazoïques ; lorsqu'un persulfate de métal alcalin est choisi, il peut être utilisé en combinaison avec un réducteur choisi parmi les polyhydroxyphénols, le sulfite et le bisulfite de sodium, le diméthylaminopropionitrile, les diazomercaptans et les ferricyanures. L'initiateur et, le cas échéant,le réducteur sont utilisables à raison de 0,1 à 2 % chacun en poids par rapport à l'ensemble des monomères présents. La première étape de ce procédé de fabrication peut se dérouler en présence d'au moins un agent dispersant anionique, cationique ou non ionique, dont on utilise habituellement de 0,5 à 10 % en poids par rapport a l'ensemble des monomères présents. Comme exemples d'agents dispersants utilisables on peut notamment citer des sels de métal alcalin et d'ammonium d'alcoyl-, aryl-, alcaryl- et aralcoyl-sulfonates et -sulfates, ou de polyéther-sulfates ; les phosphates et phosphonates correspondants ; et des acides gras, esters, alcools, amines, amides et alcoylphénols éthoxylés.

Dans une dispersion aqueuse de particules de polymère comme celle utilisée dans la composition de revêtement selon l'invention :

- la proportion de l'enveloppe par rapport à la particule, qui peut être évaluée par des dosages potentiométriques, conductimétriques et des mesures viscosimétriques, est généralement comprise entre 0,5 et 5 % en poids.

- la température de transition vitreuse du noyau des particules est généralement comprise entre $+5°$ et $+40°$ C.

- la teneur en matières solides est généralement comprise entre 20 et 65 % en poids.

- la taille moyenne des particules de polymère est généralement comprise entre 0,05 $\mu$m et 1 $\mu$m.

- il peut être particulièrement avantageux que de 10 à 40 % en poids du(des) monomère(s) hydrosoluble(s) de la dispersion soient contenus dans la phase aqueuse.

Par monomère hydrosoluble copolymérisable avec le(s) monomère(s) (A) on entend notamment, au sens de la présente invention, un monomère choisi parmi les acides acrylique, méthacrylique, itaconique et maléique, les acrylates et méthacrylates d'aminoalkyle dont le groupe alkyle a de 2 à 8 atomes de carbone ainsi que leurs sels d'ammonium quaternaire,les acrylates et méthacrylates d'hydroxyalkyle dont le groupe alkyle a de 2 à 8 atomes de carbone, les esters acryliques et méthacryliques sulfonés, la (méth)acrylamide et ses dérivés substitués, la vinylpyrolidone, la vinylimidazole, les vinylpyridines, les acrylates et méthacrylates d'imidazolidone et leurs dérivés substitués.

L'interpolymère faisant partie de la dispersion aqueuse utilisée dans la composition de revêtement selon l'invention peut n'être constitué que des monomères de type (A) et (B) cités ci-dessus. Il peut aussi comprendre en outre, pour 100 parties en poids des monomères (A) et (B), jusqu'à 3 parties d'au moins un monomère réticulant choisi parmi les N-hydroxyalcoylamides des acides acrylique et méthacrylique, l'acrylamide, la méthacrylamide, le divinylbenzène et les oligoacrylates et
oligométhacrylates de polyols tels que notamment
le triéthylèneglycol di(méth)acrylate, l'éthylèneglycol diméthacrylate, le tétraéthylèneglycol di(méth)-
acrylate, le polyéthylèneglycol 200 di(méth)-
acrylate, le 1,6-hexanediol di(méth)acrylate, le néopentylglycol di(méth)acrylate, le 1,3-butylèneglycol
di(méth)acrylate, le diéthylèneglycol di(méth)-
acrylate, le triméthylolpropane tri(méth)acrylate, le
di(méth)acrylate de bisphénol A éthoxylé, le tétraacrylate de pentaerythritol, le tripropylèneglycol diacrylate, le dipentaerythritol hydroxypentaacrylate, le
triacrylate de trihydroxyéthylisocyanurate et le triacrylate de triméthylolpropane éthoxylé.

Les différents composants, autres que le liant
constitué d'une dispersion aqueuse de particules
de polymère, de la composition de revêtement
selon l'invention peuvent être définis comme suit :

- par retardateur de coalescence, on entend un
  composant capable d'induire une période
  d'évaporation libre avant la coalescence des
  particules du liant ; ce composant possède
  simultanément des propriétés anti-gélifiantes
  et peut être choisi parmi par exemple le
  propylène glycol, l'éthylène glycol et le méthoxy diglycol.
- par dispersant, encore désigné défloculant,
  on entend un composant capable d'amplifier
  la formation de charges électriques de même
  signe à la surface des particules de polymère
  et donc de favoriser la création de forces de
  répulsion de nature électrique entre ces particules. On peut utiliser par exemple des silicates de métal alcalin (notamment les métasilicates), des polyphosphates de métal alcalin
  et des sels alcalins de polyacides organiques
  (notamment les polyacrylates).
- par mouillant on entend un composé susceptible de modifier la tension superficielle du
  milieu, comprenant généralement des groupements à caractère hydrophile et hydrophobe. Il peut s'agir d'agents tensio-actifs anioniques (par exemple les alkylarylsulfonates de
  métal alcalin), cationiques (par exemple des
  sels d'ammonium quaternaire) ou non ioniques (par exemple des polyéthers oxydes).
- par modificateur de rhéologie on entend les
  polymères hydrosolubles modifiés par des
  groupements hydrophobes tel que notamment un éthoxylat d'uréthanne modifié hydrophobe.
- par base minérale on entend par exemple de
  l'ammoniaque.
- par coalescent on entend tout co-solvant susceptible de réduire la température minimale
  de formation du film de la composition tel que notamment un ester-alcool, un esteréther de glycol, un éther de glycol, ou un
mélange de ces composés.

La composition de revêtement selon l'invention
comprend généralement de 50 à 85 % en poids du
liant constitué d'une dispersion aqueuse de polymère. Elle peut en outre comprendre au moins une
solution anticorrosive telle qu'une solution aqueuse
de benzoate de sodium et/ou de nitrite de sodium.
Elle peut aussi comprendre en outre au moins un
antimoussant tel que notamment un mélange d'huile minérale et d'émulgateurs non ioniques, et/ou au
moins un biocide, c'est-à dire un composé capable
de détruire les micro-organismes, tel que notamment un dérivé chloro-allylé.

En vue de la préparation de peintures, la composition selon l'invention peut en outre comprendre
des pigments et/ou charges ; dans ce cas le retardateur de coalescence jouera simultanément un
rôle de co-solvant de mouillage de ces pigments
et/ou charges.

La composition de revêtement selon l'invention
présente, par comparaison avec les compositions
de revêtements déjà connues, de très bonnes propriétés rhéologiques, en particulier :

- une faible viscosité à bas gradient de cisaillement : sa viscosité mesurée à 20°C au
  moyen d'un rhéomètre Brookfield à 50
  tours/min.(aiguille RV6) est généralement
  comprise entre 0,4 et 4 Pa.s.
- une viscosité élevée à haut gradient de cisaillement : sa viscosité mesurée au moyen d'un
  rhéomètre Cone et Plateau à 10.000 s$^{-1}$ est
  généralement comprise entre 0,12 et 0,35
  Pa.s.

Ces très bonnes propriétés rhéologiques entrainent, au niveau des propriétés d'usage des revêtements (peintures et vernis) ainsi préparés, les
avantages suivants : applicabilité aisée, bon pouvoir garnissant, bonne tension, peu de coulure.

## Revendications

1. Composition de revêtement stable au stockage, comprenant au moins un dispersant, au
   moins un mouillant, au moins un modificateur
   de rhéologie, au moins un coalescent, au
   moins une base minérale, au moins un retardateur de coalescence et au moins un liant
   constitué d'une dispersion aqueuse de particules de polymère, ledit polymère étant constitué d'au moins un interpolymère de (A) 95 à
   99 % en poids d'au moins un monomère choisi parmi les acrylates et méthacrylates d'alkyle
   dont le groupe alkyle a de 1 à 8 atomes de
   carbone et (B) de 1 à 5 % en poids d'au
   moins un monomère hydrosoluble copolymérisable avec le(s) monomère(s) (A), lesdites particules ayant une structure composite comprenant un noyau et une enveloppe, ladite composition étant caractérisée en ce que l'enveloppe des particules de ladite dispersion contient de 50 à 90 % en moles de(s) monomère(s) hydrosoluble(s) de la dispersion et en ce que ladite dispersion est susceptible d'être obtenue par un procédé comprenant une première étape de polymérisation en émulsion dans l'eau de(s) monomère(s) (A) et une seconde étape consistant à introduire dans le réacteur, lorsque le taux d'avancement de la réaction de polymérisation a atteint une valeur au moins égale à 82 %, un mélange comprenant de 12 à 45 % en poids d'au moins un monomère hydrosoluble (B) et de 55 à 88 % en poids de monomères (A).

2. Composition de revêtement selon la revendication 1, caractérisée en ce qu'elle comprend de 50 à 85 % en poids du liant constitué d'une dispersion aqueuse de polymère.

3. Composition de revêtement selon l'une des revendications 1 et 2, caractérisée en ce qu'elle comprend en outre au moins une solution anticorrosive,

4. Composition de revêtement selon l'une des revendications 1 à 3, caractérisée en ce qu'elle comprend en outre au moins un biocide.

5. Composition de revêtement selon l'une des revendications 1 à 4, caractérisée en ce qu'elle comprend en outre au moins un antimoussant.

6. Composition de revêtement selon l'une des revendications 1 à 5, caractérisée en ce que 10 à 40 % en poids de(s) monomère(s) hydrosoluble(s) de la dispersion sont contenus dans la phase aqueuse de ladite dispersion.

7. Composition de revêtement selon l'une des revendications 1 à 6, caractérisée en ce que le monomère hydrosoluble est choisi parmi les acides acrylique, méthacrylique, itaconique et maléique, les acrylates et méthacrylates d'aminoalkyle dont le groupe alkyle a de 2 à 8 atomes de carbone ainsi que leurs sels d'ammonium quaternaire, la vinylpyrolidone, la vinylimidazole, les vinylpyridines, les acrylates et méthacrylates d'imidazolidone et leurs dérivés substitués, les esters acryliques et méthacryliques sulfonés, la (méth)acrylamide et ses dérivés substitués, les acrylates et méthacrylates d'hydroxyalkyle dont le groupe alkyle a de 2 à 8 atomes de carbone.

8. Composition de revêtement selon l'une des revendications 1 à 7, caractérisée en ce que le retardateur de coalescence est choisi parmi le propylène glycol, l'éthylène glycol et le méthoxy diglycol.

9. Composition de revêtement selon l'une des revendications 1 à 8, caractérisée en ce que la base minérale est l'ammoniaque.

10. Composition de revêtement selon l'une des revendications 1 à 9, caractérisée en ce qu'elle comprend en outre des pigments et/ou charges.

**Claims**

1. Coating composition, stable in storage, comprising at least one dispersant, at least one wetting agent, at least one rheology modifier, at least one coalescing agent, at least one inorganic base, at least one coalescence retarder and at least one binder consisting of an aqueous dispersion of polymer particles, the said polymer consisting of at least one interpolymer of (A) 95 to 99 % by weight of at least one monomer chosen from alkyl acrylates and methacrylates in which the alkyl group contains from 1 to 8 carbon atoms and (B) from 1 to 5 % by weight of at least one water-soluble monomer capable of being copolymerised with the monomer(s) (A), the said particles having a composite structure comprising a core and a coat, the said composition being characterised in that the coat of the particles of the said dispersion contains from 50 to 90 mol% of the water-soluble monomer(s) of the dispersion and in that the said dispersion is capable of being obtained by a process comprising a first stage of polymerisation of the monomer(s) (A) in emulsion in water and a second stage consisting in introducing into the reactor, when the degree of progress of the polymerisation reaction has reached a value of at least 82%, a mixture comprising from 12 to 45 % by weight of at least one water-soluble monomer (B) and from 55 to 88 % by weight of monomers (A).

2. Coating composition according to Claim 1, characterised in that it comprises from 50 to 85 % by weight of the binder consisting of an aqueous polymer dispersion.

3. Coating composition according to either of Claims 1 and 2, characterised in that it additionally comprises at least one anticorrosive solution.

4. Coating composition according to one of Claims 1 to 3, characterised in that it additionally comprises at least one biocide.

5. Coating composition according to one of Claims 1 to 4, characterised in that it additionally comprises at least one antifoaming agent.

6. Coating composition according to one of Claims 1 to 5, characterised in that 10 to 40 % by weight of the water-soluble monomer(s) of the dispersion are present in the aqueous phase of the said dispersion.

7. Coating composition according to one of Claims 1 to 6, characterised in that the water-soluble monomer is chosen from acrylic, methacrylic, itaconic and maleic acids, aminoalkyl acrylates and methacrylates in which the alkyl group contains from 2 to 8 carbon atoms and their quaternary ammonium salts, vinylpyrrolidone, vinylimidazole, vinylpyridines, imidazolidone acrylates and methacrylates and their substituted derivatives, sulphonated acrylic and methacrylic esters, (meth)acrylamide and its substituted derivatives, and hydroxyalkyl acrylates and methacrylates in which the alkyl group contains from 2 to 8 carbon atoms.

8. Coating composition according to one of Claims 1 to 7, characterised in that the coalescence retarder is chosen from propylene glycol, ethylene glycol and methoxydiglycol.

9. Coating composition according to one of Claims 1 to 8, characterised in that the inorganic base is aqueous ammonia.

10. Coating composition according to one of Claims 1 to 9, characterised in that it additionally comprises pigments and/or fillers.

**Patentansprüche**

1. Lagerfähige Überzugszusammensetzung enthaltend mindestens ein Dispergierungsmittel, mindestens ein Netzmittel, mindestens einen Rheologieregler, mindestens ein Koaleszenzmittel, mindestens eine mineralische Base, mindestens einen Koaleszenzverzögerer und mindestens ein von einer wäßrigen Polymerteilchendispersion gebildetes Bindemittel, wobei das genannte Polymer von mindestens einem Interpolymer aus (A) 95 bis 99 Gew.-% mindestens eines Monomers, das ausgewählt ist aus den Alkylacrylaten und -methacrylaten, deren Alkylgruppe 1 bis 8 Kohlenstoffatome besitzt, und (B) 1 bis 5 Gew.-% mindestens eines mit dem (den) Monomer(en) (A) copolymerisierbaren wasserlöslichen Monomers gebildet ist, die genannten Teilchen eine Verbundstruktur mit einem Kern und einer Hülle besitzen und die Zusammensetzung dadurch gekennzeichnet ist, daß die Hülle der Teilchen der genannten Dispersion 50 bis 90 Mol-% des (der) wasserlösliche(n) Monomer(s)(e) der Dispersion enthalten und daß die genannte Dispersion durch ein Verfahren erhalten werden kann, das einen ersten Schritt der Polymerisation in Emulsion des (der) Monomer(s)(e) (A) in Wasser und einen zweiten Schritt umfaßt, der darin besteht, in den Reaktor eine Mischung enthaltend 12 bis 45 Gew.-% mindestens eines wasserlöslichen Monomers und 55 bis 88 Gew.-% an Monomeren (A) einzubringen, wenn der Grad des Fortschritts der Polymerisationsreaktion einen Wert von mindestens 82 % erreicht.

2. Überzugszusammensetzung nach Anspruch 1, dadurch gekennzeichnet, daß sie 50 bis 85 Gew.-% an dem von einer wäßrigen Polymerdispersion gebildeten Bindemittel enthält.

3. Überzugszusammensetzung nach Anspruch 1 oder 2, dadurch gekennzeichnet, daß sie weiters mindestens eine Korrosionsschutzmittellösung enthält.

4. Überzugszusammensetzung nach einem der Ansprüche 1 bis 3, dadurch gekennzeichnet, daß sie weiters mindestens ein Biozid enthält.

5. Überzugszusammensetzung nach einem der Ansprüche 1 bis 4, dadurch gekennzeichnet, daß sie weiters mindestens ein Antischaummittel enthält.

6. Überzugszusammensetzung nach einem der Ansprüche 1 bis 5, dadurch gekennzeichnet, daß 10 bis 40 Gew.-% des (der) wasserlöslichen Monomer(s)(e) der Dispersion in der wäßrigen Phase der genannten Dispersion enthalten sind.

7. Überzugszusammensetzung nach einem der Ansprüche 1 bis 6, dadurch gekennzeichnet, daß das wasserlösliche Monomer ausgewählt ist aus der Gruppe bestehend aus Acrylsäure, Methacrylsäure, Itakonsäure und Maleinsäure, den Aminoalkylacrylaten und -methacrylaten, deren Alkylgruppe 2 bis 8 Kohlenstoffatome besitzt, sowie deren quaternäre Ammoniumsalze, Vinylpyrrolidon, Vinylimidazol, die Vinylpyridine, die Imidazolidonacrylate und -methacrylate und deren substituierte Verbindungen, die sulfurierten Acryl- und Methacrylester, Methacrylamid und seine substituierten Verbindungen und die Hydroxyalkylacrylate und -methacrylate, deren Alkylgruppe 2 bis 8 Kohlenstoffatome besitzt.

8. Überzugszusammensetzung nach einem der Ansprüche 1 bis 7, dadurch gekennzeichnet, daß der Koaleszenzverzögerer ausgewählt ist aus der Gruppe bestehend aus Propylenglykol, Ethylenglykol und Methoxydiglykol.

9. Überzugszusammensetzung nach einem der Ansprüche 1 bis 8, dadurch gekennzeichnet, daß die mineralische Base Ammoniak ist.

10. Überzugszusammensetzung nach einem der Ansprüche 1 bis 9, dadurch gekennzeichnet, daß sie weiters Pigmente und/oder Füllstoffe enthält.